(19) Europäisches Patentamt
European Patent Office
Office européen des brevets

(11) EP 1 228 136 B1

(12) **EUROPÄISCHE PATENTSCHRIFT**

(45) Veröffentlichungstag und Bekanntmachung des Hinweises auf die Patenterteilung:
**03.09.2003 Patentblatt 2003/36**

(21) Anmeldenummer: **00960503.1**

(22) Anmeldetag: **22.08.2000**

(51) Int Cl.[7]: **C08K 5/5353**, C08K 5/5317, C08L 69/00

(86) Internationale Anmeldenummer:
**PCT/EP00/08163**

(87) Internationale Veröffentlichungsnummer:
**WO 01/018105 (15.03.2001 Gazette 2001/11)**

(54) **FLAMMWIDRIGE POLYCARBONAT-ABS-BLENDS**

FLAME-RESISTANT POLYCARBONATE ABS BLENDS

MELANGES DE POLYCARBONATE-ABS IGNIFUGEANTS

(84) Benannte Vertragsstaaten:
**AT BE CH CY DE DK ES FI FR GB GR IE IT LI LU MC NL PT SE**

(30) Priorität: **02.09.1999 DE 19941821**

(43) Veröffentlichungstag der Anmeldung:
**07.08.2002 Patentblatt 2002/32**

(73) Patentinhaber: **Bayer Aktiengesellschaft
51368 Leverkusen (DE)**

(72) Erfinder:
- **ZOBEL, Michael
40547 Düsseldorf (DE)**
- **ECKEL, Thomas
41540 Dormagen (DE)**
- **DERR, Torsten
41542 Dormagen (DE)**
- **WITTMANN, Dieter
51375 Leverkusen (DE)**

(56) Entgegenhaltungen:
**EP-A- 0 594 553**
**US-A- 5 578 666**
**US-A- 5 650 464**
**US-A- 5 844 028**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 228 136 B1

## Beschreibung

Die vorliegende Erfindung betrifft mit Phosphonataminen ausgerüstete Polycarbonat-ABS-Formmassen, die einen ausgezeichneten Flammschutz und sehr gute Verarbeitungseigenschaften aufweisen, wobei das Pfropfpolymerisat mittels Masse-, Lösungs- oder Masse-Suspensions-Polymerisationsverfahren hergestellt wird.

US-P 4 073 767 und 5 844 028 beschreiben cyclische Phosphorverbindungen einschließlich Phosphorinan-Ringe als geeignete Flammschutzmittel für Polyurethane, Polycarbonate, Polyester und Polyamide. In US-P 4 397 750 werden bestimmte cyclische Phosphonatester als effiziente Flammschutzmittel für Polypropylen und andere Polyolefine beschrieben. In US-P 5 276 066 und US-P 5 844 028 werden bestimmte (1,3,2-Dioxaphosphorinanmethan) -Amine beschrieben, die geeignete Flammschutzmittel für Polyurethane, Polyester, Styrolpolymere, PVC, PVAc oder Polycarbonat darstellen.

US-P 3 505 431, FR-P 1 371 139, US-P 3 711 577, US-P 4 054 544 beschreiben acyclische Triphosphonatamine, die zum Teil halogeniert sind.

In EP-A 0 640 655 werden Formmassen aus aromatischem Polycarbonat, styrolhaltigen Copolymerisaten und Pfropfpolymerisaten beschrieben, die mit monomeren und/oder oligomeren Phosphorverbindungen flammwidrig ausgerüstet werden können.

In EP-A 0 363 608 werden flammwidrige Polymermischungen aus aromatischem Polycarbonat, styrolhaltigem Copolymer oder Pfropfcopolymer sowie oligomeren Phosphaten als Flammschutzadditive beschrieben. Für manche Anwendungen, wie beispielsweise Formteile im Innern von Gehäuseteilen, ist die Wärmeformbeständigkeit dieser Mischungen oft nicht ausreichend.

In US-P 5 061 745 werden Polymermischungen aus aromatischem Polycarbonat, ABS-Pfropfpolymerisat und/oder styrolhaltigem Copolymer und Monophosphaten als Flammschutzadditive beschrieben. Zur Herstellung dünnwandiger Gehäuseteile ist das Niveau der Spannungsrissbeständigkeit dieser Mischungen oft nicht ausreichend.

Aufgabe der vorliegenden Erfindung ist die Bereitstellung von Polycarbonat/ABS-Blends mit einer ausgezeichneten Flammfestigkeit und ausgezeichneten Verarbeitungseigenschaften wie verbessertem Fließverhalten, verbessertem E-Modul und reduzierter Werkzeugbelagsbildung während des Verarbeitungsprozesses. Dieses Eigenschaftsspektrum wird besonders bei Anwendungen im Bereich Datentechnik wie etwa für Gehäuse von Monitoren, Druckern, Printern, Kopierern usw. gefordert.

Es wurde nun gefunden, dass PC/ABS-Formmassen, die Phosphonatamin in Kombination mit mittels Masse-, Lösungs- oder Massse-Suspensions-Polymerisationsverfahren hergestelltem Pfropfpolymerisat auf Basis eines Dienkautschuks die gewünschten Eigenschaften aufweisen.

Gegenstand der Erfindung sind daher Blends enthaltend

A) 40 bis 99, vorzugsweise 60 bis 98,5 Gew.-Teile aromatisches Polycarbonat und/oder Polyestercarbonat

B) 0,5 bis 60, vorzugsweise 1 bis 40, insbesondere 2 bis 25 Gew.-Teile mittels Masse-, Lösungs- oder Masse-Suspensions-Polymerisationsverfahren hergestelltes Pfropfpolymerisat von

B.1) 50 bis 99, vorzugsweise 65 bis 98 Gew.-% eines oder mehrerer Vinylmonomeren auf
B.2) 50 bis 1, vorzugsweise 35 bis 2 Gew.-% einer oder mehrerer Pfropfgrundlagen mit einer Glasumwandlungstemperatur <10°C, vorzugsweise <0°C, besonders bevorzugt < -10°C,

C) 0 bis 45, vorzugsweise 0 bis 30, besonders bevorzugt 2 bis 25 Gew.-Teile mindestens eines thermoplastischen Polymers, ausgewählt aus der Gruppe der Vinyl(co)polymerisate und Polyalkylenterephthalate,

D) 0,1 bis 30 Gew.-Teile, vorzugsweise 1 bis 25 Gew.-Teile, besonders bevorzugt 2 bis 20 Gew.-Teile Phosphonatamin der Formel (I)

$$A_{3-y}\text{-N-}B_y \qquad (I),$$

in welcher
A für einen Rest der Formel (IIa)

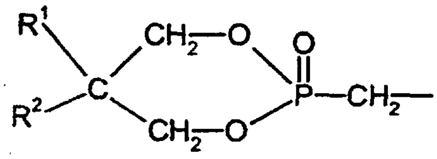

(IIa)

oder (IIb)

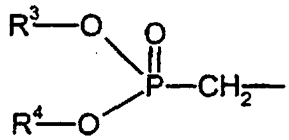

(IIb)

steht,

| | |
|---|---|
| $R^1$ und $R^2$ | unabhängig voneinander für unsubstituiertes oder substituiertes $C_1$-$C_{10}$-Alkyl oder für unsubstituiertes oder substituiertes $C_6$-$C_{10}$-Aryl, stehen, |
| $R^3$ und $R^4$ | unabhängig voneinander für unsubstituiertes oder substituiertes $C_1$-$C_{10}$-Alkyl oder unsubstituiertes oder substituiertes $C_6$-$C_{10}$-Aryl stehen oder |
| $R^3$ und $R^4$ | zusammen für unsubstituiertes oder substituiertes $C_3$-$C_{10}$-Alkylen stehen, |
| y | die Zahlenwerte 0, 1 oder 2 bedeuten und |
| B | unabhängig für Wasserstoff, gegebenenfalls halogeniertes $C_2$-$C_8$-Alkyl, unsubstituiertes oder substituiertes $C_6$-$C_{10}$-Aryl steht, |

E) 0 bis 5, vorzugsweise 0,1 bis 3, besonders bevorzugt 0,1 bis 1, ganz besonders bevorzugt 0,1 bis 0,5 Gew.-Teile fluoriertes Polyolefin.

## Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (III)

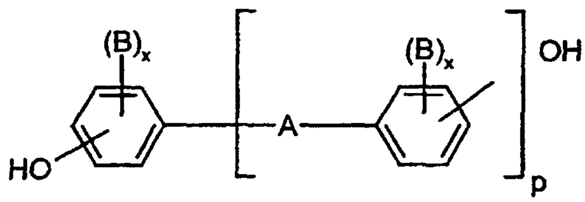

(III),

wobei

A eine Einfachbindung, $C_1$-$C_5$-Alkylen, $C_2$-$C_5$-Alkyliden, $C_5$-$C_6$-Cycloalkyliden, -O-, -SO-, -CO-, -S-, $-SO_2-$, $C_6$-$C_{12}$-Arylen, an das weitere aromatische gegebenenfalls Heteroatome enthaltende Ringe kondensiert sein können,
oder ein Rest der Formel (IV) oder (V)

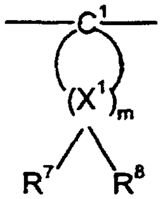

(IV)

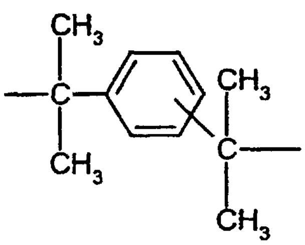

(V)

B jeweils $C_1$-$C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^7$ und $R^8$ für jedes $X^1$ individuell wählbar, unabhängig voneinander Wasserstoff oder $C_1$-$C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einen Atom $X^1$, $R^7$ und $R^8$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte ($M_w$, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80

Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

## Komponente B

Das kautschukmodifizierte Pfropfpolymerisat B umfasst ein statistisches (Co)polymerisat aus Monomeren gemäß B.1.1 und B.1.2, sowie einem mit dem statistischen (Co)polymerisat aus Monomeren gemäß B.1.1 und B.1.2 gepfropften Kautschuk B.2, wobei die Herstellung von B in bekannter Weise nach einem Masse- oder Lösungsoder Masse-Suspensions-Polymerisationsverfahren erfolgt, wie z.B. in den US 3 243 481, US 3 509 237, US 3 660 535, 4 221 833 und US 4 239 863 beschrieben.

Beispiele für Monomere B.1.1 sind Styrol, α-Methylstyrol, halogen- oder alkylkernsubstituierte Styrole wie p-Methylstyrol, p-Chlorstyrol, (Meth)acrylsäure-$C_1$-$C_8$alkylester wie Methylmethacrylat, n-Butylacrylat und t-Butylacrylat. Beispiele für Monomere B.1.2 sind ungesättigte Nitrile wie Acrylnitril, Methacrylnitril, (Meth)Acrylsäure-$C_1$-$C_8$-alkylester wie Methylmethacrylat, n-Butylacrylat, t-Butylacrylat, Derivate (wie Anhydride und Imide) ungesättigter Carbonsäuren wie Maleinsäureanhydrid und N-Phenyl-maleinimid oder Mischungen davon.

Bevorzugte Monomere B.1.1 sind Styrol, α-Methylstyrol und/oder Methylmethacrylat, bevorzugte Monomere B.1.2 sind Acrylnitril, Maleinsäureanhydrid und/oder Methylmethacrylat.

Besonders bevorzugte Monomere sind B.1.1 Styrol und B.1.2 Acrylnitril.

Für die kautschukmodifizierten Pfropfpolymerisate B geeignete Kautschuke B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloroprenund Ethylen/Vinylacetat-Kautschuke.

Bevorzugte Kautschuke B.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B. 2 unterhalb 10°C, vorzugsweise unterhalb -10°C liegt. Besonders bevorzugt wird reiner Polybutadienkautschuk.

Die Komponente B kann, falls erforderlich und wenn dadurch die Kautschukeigenschaften der Komponente B.2 nicht beeinträchtigt werden, zusätzlich noch geringe Mengen, üblicherweise weniger als 5 Gew.-%, vorzugsweise weniger als 2 Gew.-%, bezogen auf B.2, vernetzend wirkender ethylenisch ungesättigter Monomeren enthalten. Beispiele für solche vernetzend wirkenden Monomere sind Alkylendiol-di-(meth)-acrylate, Polyester-di-(meth)-acrylate, Divinylbenzol, Trivinylbenzol, Triallylcyanurat, Allyl-(meth)-acrylat, Diallylmaleat und Diallylfumarat.

Das kautschukmodifizierte Pfropfpolymerisat B wird erhalten durch Pfropfpolymerisation von 50 bis 99, bevorzugt 65 bis 98, besonders bevorzugt 75 bis 97 Gew.-Teilen eines Gemischs aus 50 bis 99, bevorzugt 60 bis 95 Gew.-Teilen Monomeren gemäß B.1.1 und 1 bis 50, bevorzugt 5 bis 40 Gew.-Teilen Monomeren gemäß B.1.2 in Gegenwart von 1 bis 50, vorzugsweise 2 bis 35, besonders bevorzugt 2 bis 15, insbesondere 2 bis 13 Gew.-Teilen der Kautschukkomponente B.2, wobei die Pfropfpolymerisation nach einem Masse- oder Lösungs- oder Masse-Suspensions-Polymerisationsverfahren durchgeführt wird.

Wesentlich bei der Herstellung der kautschukmodifizierten Pfropfpolymerisate B ist, dass die Kautschukkomponente B.2 vor der Pfropfpolymerisation im Gemisch der Monomeren B.1.1 und B.1.2 in gelöster Form vorliegt Die Kautschukkomponente B.2 darf also weder so stark vernetzt sein, dass eine Lösung in B.1.1 und B.1.2 unmöglich wird, noch darf B.2 zu Beginn der Pfropfpolymerisation bereits in Form diskreter Teilchen vorliegen. Die für die Produkteigenschaften von B wichtige Teilchenmorphologie und zunehmende Vernetzung von B.2 bildet sich erst im Verlauf der Pfropfpolymerisation aus (siehe hierzu beispielsweise Ullmann, Encyclopädie der technischen Chemie, Band 19, S. 284 ff., 4. Auflage 1980).

Das statistische Copolymerisat aus B.1.1 und B.1.2 liegt üblicherweise im Polymerisat B zu einem Teil auf dem Kautschuk B.2 auf- oder eingepfropft vor, wobei dieses Pfropfmischpolymerisat diskrete Teilchen im Polymerisat B ausbildet. Der Anteil des auf- oder eingepfropften Copolymerisats aus B.1.1 und B.1.2 am gesamten Copolymerisat aus B.1.1 und B.1.2 - also die Pfropfausbeute (= Gewichtsverhältnis der tatsächlich gepfropften Pfropfmonomeren zu den insgesamt verwendeten Pfropfmonomeren x 100, angegeben in %) - sollte dabei 2 bis 40 %, vorzugsweise 3 bis 30 %, besonders bevorzugt 4 bis 20 % betragen.

Der mittlere Teilchendurchmesser der resultierenden gepfropften Kautschukteilchen (ermittelt durch Auszählung an elektronenmikroskopischen Aufnahmen) liegt im Bereich von 0,5 bis 5 µm, vorzugsweise von 0,8 bis 2,5 µm.

**Komponente C**

Die Komponente C umfasst ein oder mehrere thermoplastische Vinyl (co)polymerisate C.1 und/oder Polyalkylenterephthalate C.2.

Geeignet sind als Vinyl(co)Polymerisate C.1 Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

C.1.1 50 bis 99, vorzugsweise 60 bis 80 Gew.-Teilen Vinylaromaten und/oder kernsubstituierten Vinylaromaten wie beispielsweise Styrol, $\alpha$-Methylstyrol, p-Methylstyrol, p-Chlorstyrol) und/oder Methacrylsäure-($C_1$-$C_8$)-Alkylester wie z.B. Methylmethacrylat, Ethylmethacrylat), und

C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-($C_1$-$C_8$)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.

Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise Molekulargewichte $\overline{M}_w$ (Gewichtsmittel, ermittelt durch Lichtstreuung oder Sedimentation) zwischen 15 000 und 200 000.

Die Polyalkylenterephthalate der Komponente C.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernstcinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxyphenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

**Komponente D**

Die erfindungsgemäßen Formmassen enthalten als Flammschutzmittel wenigstens eine Phosphonataminverbindung der Formel (I)

$$A_{3-y}N\text{-}B_y \qquad (I),$$

in welcher

A für

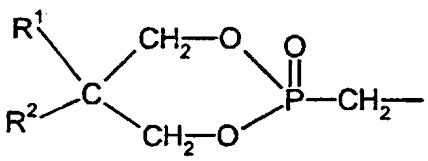

oder

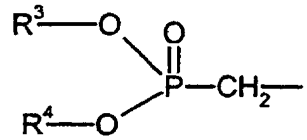

steht,
wobei

$R^1$, $R^2$, $R^3$ und $R^4$ sowie B und y die oben angegebene Bedeutung haben.

B steht vorzugsweise unabhängig für Wasserstoff, für Ethyl, n- oder iso-Propyl, welche durch Halogen substituiert sein können, unsubstituiertes oder durch $C_1$-$C_4$-Alkyl und/oder Halogen substituiertes $C_6$-$C_{10}$-Aryl, insbesondere Phenyl oder Naphthyl.

Alkyl in $R^1$, $R^2$, $R^3$ und $R^4$ steht unabhängig vorzugsweise für Methyl, Ethyl, n-Propyl, iso-Propyl, n-, iso-, sec. oder tert. Butyl, Pentyl oder Hexyl.

Substituiertes Alkyl in $R^1$, $R^2$, $R^3$ und $R^4$ steht unabhängig vorzugsweise für durch Halogen substituiertes $C_1$-$C_{10}$-Alkyl, insbesondere für ein- oder zweifach substituiertes Methyl, Ethyl, n-Propyl, iso-Propyl, n-, iso-, sec. oder tert.-Butyl, Pentyl oder Hexyl.

$R^3$ und $R^4$ bilden zusammen mit dem Kohlenstoff, an das sie gebunden sind, vorzugsweise Cyclopentyl, Cyclohexyl, Cycloheptyl oder Cyclooctyl, insbesondere Cyclopentyl oder Cyclohexyl.

$C_5$-$C_{10}$-Aryl steht in $R^1$, $R^2$, $R^3$ und $R^4$ unabhängig vorzugsweise für Phenyl, Naphthyl oder Binaphthyl, insbesondere o-Phenyl, o-Naphthyl, o-Binaphthyl, welche durch Halogen (im allgemeinen ein-, zwei- oder dreifach) substituiert sein können.

Beispielhaft und vorzugsweise werden genannt: 5,5,5',5',5",5"-Hexamethyltris(1,3,2-dioxaphosphorinan-methan)amin-2,2',2"-trioxid der Formel (I-1)

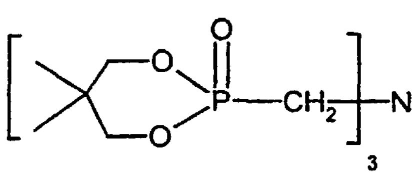

**(I-1)**

(Versuchsprodukt XPM 1000 Fa. Solutia Inc., St. Louis, USA) 1,3,2-Dioxaphosphorinan-2-methanamin, N-butyl-N[(5,5-dimethyl-1,3,2-dioxaphosphorinan-2-yl)methyl]-5,5-dimethyl-, P,2-dioxide; 1,3,2-Dioxaphosphorinane-2-methanamin, N-[[5,,5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N-[(5,5-dimethyl-1,3,2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-di-chloromethyl-, P,2-dioxid, 1,3,2-Dioxaphosphorinan-2-methanamin, N-[(5,5-di-chloromethyl-1,3,2-dioxoaphosphorinan-2-yl)methyl]-5,5-di-chloromethyl-N-phenyl-, P,2-dioxid; 1,3,2-Dioxaphosphorinan-2-methanamin, N,N-di-(4-chlorobutyl)-5,5-dimethyl-2-oxide; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.

Bevorzugt sind weiterhin:

Verbindungen der Formel (I-2) oder I-3)

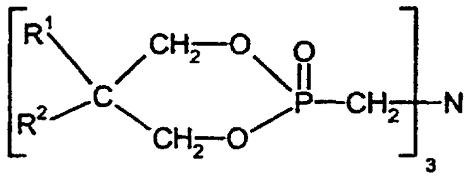

(I-2)

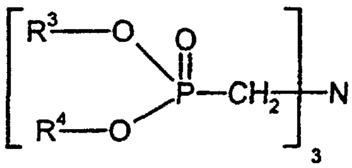

(I-3)

wobei
$R^1$, $R^2$, $R^3$ und $R^4$ die oben angegebenen Bedeutungen haben.

Besonders bevorzugt sind Verbindungen der Formel (I-2), (I-1). Besonders bevorzugt sind auch die oben genannten Einzelverbindungen.

Die Verbindungen der Formel (I) können nach folgenden Verfahren hergestellt werden:

a) $PCl_3$ wird zu einer Mischung von 1,3-Diol-Derivaten, Wasser und einem organischen Lösungsmittel bei einer Temperatur von 10-60°C zugegeben. Man erhält dabei ein 5,5-disubstituiertes 1,3,2-Dioxaphosphorinan-2-oxid der Formel (Ia)

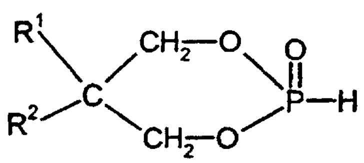

(Ia),

wobei $R_1$ und $R_2$ die oben genannte Bedeutung haben,

b) nach Reinigung wird das 1,3,2-Dioxaphosphorinan-2-oxid in Paraformaldehyd mit einem Amin $B_yNH_{3-y}$, wobei B und y die oben genannte Bedeutung haben, zur Reaktion gebracht,

c) nach erneuter Reinigung und Trocknung wird das Phosphonatamin der Formel (I) erhalten.

Eine detailierte Beschreibung des Herstellungsverfahren kann aus US-Patentschrift 5 844 028 entnommen werden.

**Komponente E**

Die fluorierten Polyolefine E sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0,05 bis 1 000, vorzugsweise 0,08 bis 20 µm. Im allgemeinen haben die fluorierten Polyolefine E eine Dichte von 1,2 bis 2,3 g/cm$^3$. Bevorzugte fluorierte Polyolefine E sind Polytetrafluorethylen, Polyvinylidenfluorid, Tetrafluorethylen (Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wässrigem Medium mit einem freie Radikale bildenden Katalysator, beispielsweise Natrium-, Kalium- oder Ammoniumperoxidisulfat bei Drucken von 7 bis 71 kg/cm$^2$ und bei Temperaturen von 0 bis 200°C, vorzugsweise bei Temperaturen von 20 bis 100°C. (Nähere Einzelheiten s. z. B. US-Patent 2 393 967). Je nach Einsatzform kann die Dichte dieser Materialien zwischen 1,2 und 2,3 g/cm$^3$, die mittlere Teilchengröße zwischen 0,5 und 1 000 µm liegen.

Erfindungsgemäß bevorzugte fluorierte Polyolefine E sind Tetrafluorethylenpolymerisate mit mittleren Teilchendurchmesser von 0,05 bis 20 µm, vorzugsweise 0,08 bis 10 µm, und eine Dichte von 1,2 bis 1,9 g/cm$^3$.

E.1) als koagulierte Mischung mit mindestens einer der Komponenten A bis C, wobei das fluorierte Polyolefin E bzw. Polyolefingemisch als Emulsion mit mindestens einer Emulsion der Komponente A bis C gemischt und anschließend koaguliert wird
oder
E.2) als Präcompound mit mindestens einer der Komponenten A bis C, wobei die fluorierten Polyolefine E als Pulver mit einem Pulver oder einem Granulat mindestens einer der Komponenten A bis C vermischt und in der Schmelze, im allgemeinen bei Temperaturen von 208°C bis 330°C in den üblichen Aggregaten wie Innenknetern, Extruder oder Doppelwellenschnecken, compoundiert wird.

Bevorzugte Zubereitungen für die fluorierten Polyolefine E sind koagulierte Mischungen mit einem Pfropfpolymerisat B oder einem Vinyl(co)polymerisat C.

Geeignete, in Pulverform einsetzbare fluorierte Polyolefine E sind Tetrafluorethylenpolymerisate mit mittleren Teilchendurchmesser von 100 bis 1 000 µm und Dichten von 2,0 g/cm$^3$ bis 2,3 g/cm$^3$.

Zur Herstellung einer koagulierten Mischung aus einem Pfropfpolymerisat B und Komponente E wird zuerst eine wässrige Emulsion (Latex) eines Pfropfpolymerisates mit einer feinteiligen Emulsion eines Tetrafluorethylenpolymerisates E vermischt; geeignete Tetrafluorethylenpolymerisat-Emulsionen besitzen üblicherweise Feststoffgehalte von 30 bis 70 Gew.-%, insbesondere von 50 bis 60 Gew.-%, vorzugsweise von 30 bis 35 Gew.-%.

Die Mengenangabe bei der Beschreibung der Komponente A, B und C enthält nicht den Anteil des Pfropfpolymerisats, Vinyl(co)polymerisat bzw. Polycarbonat fiir die koagulierte Mischung gemäß E.1) und E.2).

In der Emulsionsmischung liegt das Gleichgewichtsverhältnis Pfropfpolymerisat B bzw. (Co)polymerisate zum fluierten Polyolefin E bei 95:5 bis 60:40, vorzugsweise 90:10 bis 50:50. Anschließend wird die Emulsionsmischung in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Fall erforderlich, kann bei 50 bis 200°C, bevorzugt 70 bis 100°C, getrocknet werden.

Geeignete Tetrafluorethylenpolymerisat-Emulsionen sind handlsübliche Produkte und werden beispielsweise von der Firma DuPont als Teflon® 30 N angeboten.

Die erfindungsgemäßen Formmassen können wenigstens eines der üblichen Additive. wie Gleit- und Entformungsmittel, Nukleiermittel, Antistatika, Stabilisatoren sowie Farbstoffe und Pigmente enthalten.

Die erfindungsgemäßen Formmassen können bis zu 35 Gew.-%, bezogen auf die Gesamt-Formmasse, eines weiteren, gegebenenfalls synergistisch wirkenden Flammschutzmittels enthalten. Beispielhaft werden als weitere Flammschutzmittel organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Hydroxoantimonat, Zirkonoxid, Zirkonhydroxid, Molybdenoxid, Ammoniummolybdat, Zinkborat, Ammoniumborat, Bariummetaborat, Talk, Silikat, Siliziumoxid und Zinnoxid sowie Siloxanverbindungen genannt.

Weiterhin sind als Flammschutzmittel Phosphorverbindungen der Formel (VI) geeignet,

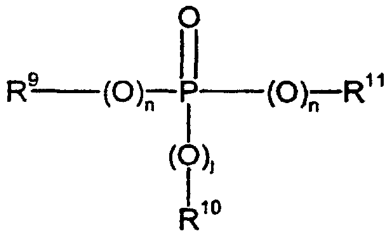

(VI),

in der

$R^9$, $R^{10}$ und $R^{11}$ unabhängig voneinander ein gegebenenfalls halogeniertes $C_1$-$C_8$-Alkyl oder ein gegebenenfalls halogeniertes und/oder alkyliertes $C_5$- oder $C_6$-Cycloalkyl oder ein gegebenenfalls halogeniertes und/oder alkyliertes und/oder aralkyliertes $C_6$-$C_{30}$-Aryl, und

"n" und "l" unabhängig voneinander 0 oder 1 sind.

Diese Phosphorverbindungen sind generell bekannt (siehe beispielsweise Ullmann, Enzyklopädie der technischen Chemie, Band 18, Seiten 301 ff, 1979 und EP-A 345 522). Die aralkylierten Phosphorverbindungen sind beispielsweise in der DE-OS 38 24 356 beschrieben.

Gegebenenfalls halogenierte $C_1$-$C_8$-Alkylreste gemäß (VI) können einfach oder mehrfach halogeniert, linear oder verzweigt sein. Beispiele für Alkylreste sind Chlorethyl, 2-Chlorpropyl, 2,3-Dibrompropyl, Butyl, Methyl oder Octyl.

Gegebenenfalls halogenierte und/oder alkylierte $C_5$-oder $C_6$-Cycloalkyle gemäß (VI) sind gegebenenfalls einfach bis mehrfach halogenierte und/oder alkylierte $C_5$- oder $C_6$-Cycloalkyle, also z.B. Cyclopentyl, Cyclohexyl, 3,3,5-Trimethylcyclohexyl und vollchloriertes Cyclohexyl.

Gegebenenfalls halogenierte und/oder alkylierte und/oder aralkylierte $C_6$-$C_{30}$-Arylreste gemäß (VI) sind gegebenenfalls ein oder mehrkernig, einfach oder mehrfach halogeniert und/oder alkyliert und/oder aralkyliert, z.B. Chlorphenyl, Bromphenyl, Pentachlorphenyl, Pentabromphenyl, Phenyl, Kresyl, Isopropylphenyl, benzylsubstituiertes Phenyl und Naphthyl.

Bevorzugt stehen $R^9$, $R^{10}$ und $R^{11}$ unabhängig voneinander für Methyl, Ethyl, Butyl, Octyl, Phenyl, Kresyl, Cumyl oder Naphthyl. Besonders bevorzugt stehen $R^9$, $R^{10}$ und $R^{11}$ unabhängig voneinander für Methyl, Ethyl, Butyl, gegebenenfalls durch Methyl und/oder Ethyl substituiertes Phenyl.

Erfindungsgemäß einsetzbare Phosphorverbindungen gemäß Formel (VI) sind z.B. Tributylphosphat, Tris-(2-chlorethyl)phosphat, Tris-(2,3-dibrompropyl)phosphat, Triphenylphosphat, Trikresylphosphat, Diphenylkresylphosphat, Diphenyloctylphosphat, Diphenyl-2-ethylkresylphosphat, Tri-(isopropylphenyl)phosphat, Tris-(p-benzylphenyl)phosphat, Triphenylphosphinoxid, Methanphosphonsäuredimethylester, Methanphosphonsäuredipenthylester und Phenylphosphonsäurediethylester.

Geeignete Flammschutzmittel sind auch dimere und oligomere Phosphate, wie beispielsweise in der EP-A-0 363 608 beschrieben.

Die erfindungsgemäßen Formmassen können als Flammschutzmittel Phosphorverbindungen gemäß Formel (VII) enthalten,

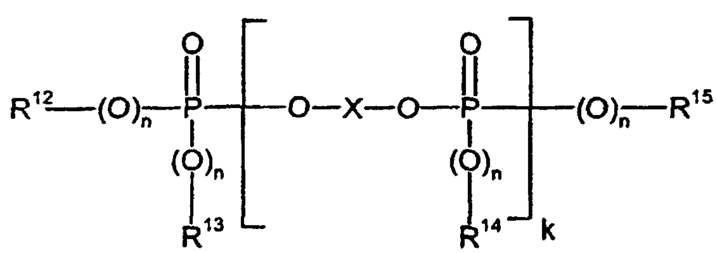

(VII)

In der Formel stehen $R^{12}$, $R^{13}$, $R^{14}$ und $R^{15}$, unabhängig voneinander für jeweils gegebenenfalls halogeniertes $C_1$-$C_8$-Alkyl, $C_5$-$C_6$-Cycloalkyl, $C_6$-$C_{20}$-Aryl oder $C_7$-$C_{12}$-Aralkyl.

Bevorzugt stehen $R^{12}$, $R^{13}$, $R^{14}$ und $R^{15}$ unabhängig voneinander für $C_1$-$C_4$-Alkyl, Phenyl, Naphthyl oder

Phenyl-$C_1$-$C_4$-alkyl. Die aromatischen Gruppen $R^{12}$, $R^{13}$, $R^{14}$ und $R^{15}$ können ihrerseits mit Halogen- und/oder Alkylgruppen, vorzugsweise Chlor, Brom und/oder $C_1$-$C_4$-Alkyl substituiert sein. Besonders bevorzugte ArylReste sind Kresyl, Phenyl, Xylenyl, Propylphenyl oder Butylphenyl sowie die entsprechenden bromierten und chlorierten Derivate davon.

X in der Formel (VII) bedeutet einen ein- oder mehrkernigen aromatischen Rest mit 6 bis 30 C-Atomen. Dieser leitet sich vorzugsweise von Diphenolen der Formel (I) ab. Besonders bevorzugt sind Diphenylphenol, Bisphenol A, Resorcin oder Hydrochinon oder deren chlorierte oder bromierte Derivaten.

n in der Formel (VII) kann, unabhängig voneinander, 0 oder 1 sein, vorzugsweise ist n gleich 1.

k steht für Werte von 0 bis 30, vorzugsweise für einen durchschnittlichen Wert von 0,3 bis 20, besonders bevorzugt 0,5 bis 10, insbesondere 0,5 bis 6.

Einsetzbar sind auch Mischungen aus 10 bis 90 Gew.-%, vorzugsweise 12 bis 40 Gew.-%, wenigstens einer Monophosphorverbindung der Formel (VI) und wenigstens einer oligomeren Phosphorverbindung beziehungsweise eines Gemisches von oligomeren Phosphorverbindungen wie in EP-A-363 608 beschrieben sowie Phosphorverbindungen gemäß Formel (VII) in Mengen von 10 bis 90 Gew.-%, vorzugsweise 60 bis 88 Gew.-%, bezogen auf die Gesamtmenge an Phosphorverbindungen, eingesetzt.
Monophosphorverbindungen der Formel (VI) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid.
Die Mischungen aus monomeren und oligomeren Phosphorverbindungen der Formel (VII) weisen durchschnittliche k-Werte von 0,3 bis 20, bevorzugt 0,5 bis 10, insbesondere von 0,5 bis 6 auf.
Die genannten Phosphorverbindungen sind bekannt (vgl. z.B. EP-A-363 608, EP-A-640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).
Die erfindungsgemäßen Formmassen enthaltend die Komponenten A bis E und gegebenenfalls weiteren bekannten Zusätzen wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperaturen von 200°C bis 300°C in üblichen Aggregaten wie Innenknetem, Extrudern und Doppelwellenschnecken schmelzcompoundiert und schmelzextrudiert, wobei die Komponente E vorzugsweise in Form der bereits erwähnten koagulierten Mischung eingesetzt wird.
Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.
Gegenstand der vorliegenden Erfindung ist daher auch ein Verfahren zur Herstellung der Formmassen.
Die erfindungsgemäßen thermoplastischen Formmassen eignen sich aufgrund ihrer ausgezeichneten Flammfestigkeit und ihrer guten mechanischen Eigenschaften zur Herstellung von Formkörpern jeglicher Art, insbesondere solchen mit erhöhten Anforderungen andas Verarbeitungsverhalten.
Darunter fallen kompliziert aufgebaute Teile mit mehreren Angussstellen und dünnwandige Gehäuseteile mit Wandstärken <2 mm, vorzugsweise <1,5 mm.
Die Formmassen der vorliegenden Erfindung können zur Herstellung von Formkörpem jeder Art verwendet werden. Insbesondere können Formkörper durch Spritzguss hergestellt werden. Beispiele für herstellbare Formkörper sind: Gehäuseteile jeder Art, z.B. für Haushaltsgeräte wie Saftpressen, Kaffeemaschinen, Mixer, für Büromaschinen, wie Monitore, Drucker, Kopierer oder Abdeckplatten für den Bausektor und Teile für den Kfz-Sektor. Sie sind außerdem auf dem Gebiet der Elektrotechnik einsetzbar, weil sie sehr gute elektrische Eigenschaften haben.
Weiterhin können die erfindungsgemäßen Formmassen beispielsweise zur Herstellung von folgenden Formkörpern bzw. Formteilen verwendet werden: Innenausbauteile für Schinenfahrzeuge, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge fiir Kinder, flächige Wandelemente, Gehäuse für Sicherheitseinrichtungen, Heckspoiler, wärmeisolierte Transportbehältnisse, Vorrichtung zur Halterung oder Versorgung von Kleintieren, Formteile für Sanitär- und Badeausrüstungen, Abdeckgitter für Lüfteröffnungen, Formteile für Garten- und Gerätehäuser und Gehäuse für Gartengeräte.
Eine weitere Form der Verarbeitung ist die Herstellung von Formkörpern durch Tiefziehen aus vorher hergestellten Platten oder Folien.
Ein weiterer Gegenstand der vorliegenden Erfindung ist daher auch die Verwendung der erfindungsgemäßen

Formmassen zur Herstellung von Formkörpern jeglicher Art, vorzugsweise der oben genannten, sowie die Formkörper aus den erfindungsgemäßen Formmassen.

## Beispiele

### Komponente A

Lineares Polycarbonat auf Basis Bisphenol A mit einer relativen Lösungsviskosität von 1,26, gemessen in $CH_2Cl_2$ als Lösungsmittel bei 25°C und einer Konzentration von 0,5 g/100 ml.

### Komponente B

B.1 Pfropfpolymerisat von 40 Gew.-Teilen eines Copolymerisats aus Styrol und Acrylnitril im Verhältnis von 73:27 auf 16 Gew.-Teile vernetzten Polybutadienkautschuk, hergestellt durch Massepolymerisation.

B.2 Vergleich
Pfropfpolymerisat von 40 Gew.-Teilen eines Copolymerisats aus Styrol und Acrylnitril im Verhältnis von 73:27 auf 60 Gew.-Teile teilchenförmigen vernetzten Polybutadienkautschuk (mittlerer Teilchendurchmesser $d_{50}$ = 0,28 µm), hergestellt durch Emulsionspolymerisation.

### Komponente C

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

### Komponente D

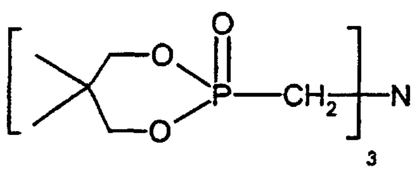

(XPM 1000 Entwicklungsprodukt Fa. Solutia Inc., Gl. Louis, Mo.)

### Komponente E

Batch aus SAN und Teflon im Gewichtsverhältnis 1:1 (Blendex®446, General Electric, N.Y. USA).
Als Entformungsmittel wird Pentaerythrittetrastearat eingesetzt.

### Herstellung und Prüfung der erfindungsgemäßen Formmassen

Das Mischen der Komponenten erfolgt auf einem 3-1-Innenkneter. Die Formkörper werden auf einer Spritzgießmaschine Typ Arburg 270 E bei 260°C hergestellt.
Die Bestimmung der Wärmeformbeständigkeit nach Vicat B erfolgt gemäß DIN 53 460 (ISO 306) an Stäben der Abmessung 80 x 10 x 4 mm.
Das Spannungsrissverhalten (ESC-Verhalten) wurde an Stäben der Abmessung 80 x 10 x 4 mm, Verarbeitungstemperatur 260°C, untersucht. Als Testmedium wurde eine Mischung aus 60 Vol.-% Toluol und 40 Vol.-% Isopropanol verwendet. Die Probekörper wurden mittels einer Kreisbogenschablone vorgedehnt (Vordehnung in Prozent) und bei Raumtemperatur im Testmedium gelagert. Das Spannungsrissverhalten wurde über die Rissbildung bzw. den Bruch in Abhängigkeit von der Vordehnung im Testmedium beurteilt.
Die MVR-Messung (240/5) [$cm^3$/10 min] erfolgt nach ISO 1133.

Die Bestimmung des Zug-E-Moduls erfolgt nach DIN 53 457 / ISO 527.

Als Maß für die Werkzeugbelagsbildung wurde die thermogravimetrische Analyse (TGA) herangezogen. Dabei wurde der Masseverlust der Mischungen unter $N_2$ als Inertgas im Temperaturbereich von 0 bis 400°C mit einer Aufheizrate von 10 K/min bestimmt. Zur Beurteilung wurde der Masseverlust bei einer Temperatur von 280°C, die üblichen Verarbeitungstemperaturen entspricht, herangezogen. Je höher der Zahlenwert, desto größer ist die Tendenz zur Belagsbildung während des Verarbeitungsprozesses. Niedrige Werte zeigen eine geringe Neigung zur Belagsbildung an.

Tabelle:

| **Formmassen und ihre Eigenschaften** (Angaben in Gew.-Teile) | | |
|---|---|---|
| Beispiel | 1 | 2 (Vergleich) |
| Komponenten A | 67,67 | 67,60 |
| B1 | 19,27 | - |
| B2 | - | 10,50 |
| C | - | 8,80 |
| D | 11,86 | 11,90 |
| E | 0,8 | 0,80 |
| Entformungsmittel | 0,4 | 0,40 |
| Vicat B120(°C) | 119 | 116 |
| UL94 3,2 mm | V0 | V0 |
| MVR (240/5), ISO 1133 ($cm^3$/10 min) | 17,8 | 12,2 |
| TGA Masseverlust bei 280°C (%) | 0,81 | 1,18 |
| Zugversuch E-Modul $N/mm^2$ | 2 622 | 2 474 |

Die erfindungsgemäßen Formmassen zeichnen sich durch eine günstige Eigenschaftskombination aus Flammschutz und mechanischen Eigenschaften aus. Dazu kommt der überraschende Befund, dass die Masse-ABS enthaltenen Formmassen zusätzliche Vorteile im Bereich Verarbeitungsverhalten aufweisen. Sowohl das Fließverhalten (MVR) als auch der Masseverlust, der als Maß für die unter Verarbeitungsbedingungen auftretende Werkzeugbelagsbildung angesehen werden kann, sind deutlich günstiger (ca. 20 %) als bei Formmassen mit Emulsions-ABS (Vergleichsbeispiel 2).

## Patentansprüche

**1.** Blends enthaltend

A) 40 bis 99 Gew.-Teile aromatisches Polycarbonat und/oder Polyestercarbonat

B) 0,5 bis 60 Gew.-Teile mittels Masse-, Lösungs- oder Masse-Suspensions-Polymerisationsverfahren hergestelltes Pfropfpolymerisat von

B.1) 50 bis 99 Gew.-% einem oder mehreren Vinylmonomeren auf

B.2) 50 bis 1 Gew.-% einer oder mehrerer Pfropfgrundlagen mit einer Glasumwandlungstemperatur <10°C,

C) 0 bis 45 Gew.-Teile mindestens eines thermoplastischen Polymers, ausgewählt aus der Gruppe der Vinyl (co)polymerisate und Polyalkylenterephthalate,

D) 0,1 bis 30 Gew.-Teile eines Phosphonatamins

$$A_{3-y}\text{-N-}B_y \qquad (I)$$

in welcher

A für einen Rest der Formel (IIa)

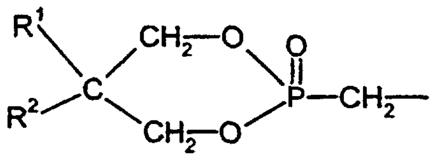

(IIa)

oder (IIb)

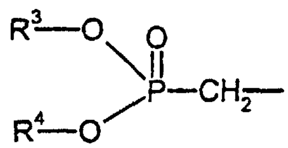

(IIb)

steht,

$R^1$ und $R^2$ unabhängig voneinander für unsubstituiertes oder substituiertes $C_1$-$C_{10}$-Alkyl oder für unsubstituiertes oder substituiertes $C_6$-$C_{10}$-Aryl, stehen,

$R^3$ und $R^4$ unabhängig voneinander für unsubstituiertes oder substituiertes $C_1$-$C_{10}$-Alkyl oder unsubstituiertes oder substituiertes $C_6$-$C_{10}$-Aryl stehen oder

$R^3$ und $R^4$ zusammen für unsubstituiertes oder substituiertes $C_3$-$C_{10}$-Alkylen stehen,

y die Zahlenwerte 0, 1 oder 2 bedeuten und

B unabhängig für Wasserstoff, gegebenenfalls halogeniertes $C_2$-$C_8$-Alkyl, unsubstituiertes oder substituiertes $C_6$-$C_{10}$-Aryl steht,

E) 0 bis 5 Gew.-Teile fluoriertes Polyolefin.

**2.** Blends gemäß Anspruch 1, enthaltend

60 bis 98,5 Gew.-Teile A
1 bis 40 Gew.-Teile B
0 bis 30 Gew.-Teile C
1 bis 25 Gew.-Teile D und
0,1 bis 3 Gew.-Teile E

**3.** Blends gemäß Anspruch 1 und 2 enthaltend 2 bis 25 Gew.-Teile C.

**4.** Blends gemäß der Ansprüche 1 bis 3, enthaltend 2 bis 20 Gew.-Teile D.

**5.** Blends gemäß der vorhergehenden Ansprüche, wobei Vinylmonomere B.1 Gemische sind aus

B.1.1 Styrol, α-Methylstyrol, halogen- oder alkylkernsubstituierte Styrole und/oder (Meth)Acrylsäure-$C_1$-$C_8$-alkylester und

B.1.2 ungesättigte Nitrile, (Meth)Acrylsäure-$C_1$-$C_8$-alkylester und/oder Derivate ungesättigter Carbonsäuren.

**6.** Blends gemäß der vorhergehenden Ansprüche, wobei die Pfropfgrundlage ausgewählt ist aus mindestens einem Kautschuk aus der Gruppe der Dienkautschuke, EP(D)M-Kautschuke, Acrylat-, Polyurethan-, Silikon-, Chloropren- und Ethylen/Vinylacetat-Kautschuk.

**7.** Blends nach einem oder mehrerer der vorangegangenen Ansprüche, wobei als Phosphonate ausgewählt sind: 5,5,5',5',5",5"-Hexamethyltris-(1,3,2-dioxaphosphorinan-methan)amin-2,2',2"-trioxid, 1,3,2-Dioxaphosphorinan-2-methanamin, N-butyl-N[(5,5-dimethyl-1,3,2-dioxaphosphorinan-2-yl)methyl]-5,5-dimethyl-, P2-dioxide; 1,3,2-Dioxaphosphorinane-2-methanamin, N-[[5,5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N[(5,5-dimethyl-1,3,2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-dichloromethyl-, P,2-dioxid, 1,3,2-Dioxaphosphorinan-2-methanamin, N-[(5,5-di-chloromethyl-1,3,2-dioxoaphosphorinan-2-yl)methyl]-5,5-di-chloromethyl-N-phenyl-, P,2-dioxid; 1,3,2-Dioxaphosphorinan-2-methanamin, N,N-di-(4-chlorobutyl)-5,5-dimethyl-2-oxide; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P,2-dioxid.

**8.** Blends nach einem der Ansprüche 1-6, enthaltend als Phosphonat die Verbindung der Formel:

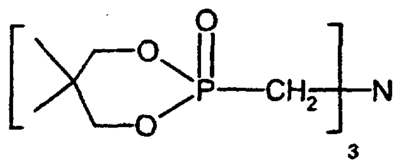

**9.** Blends gemäß der vorhergehenden Ansprüche, enthaltend wenigstens ein Additiv ausgewählt aus der Gruppe der Gleit- und Entformungsmittel, Nukleiermittel, Antistatika, Stabilisatoren, Farbstoffe und Pigmente.

**10.** Blends gemäß der vorhergehenden Ansprüche, enthaltend weitere Flammschutzmittel, welche verschieden sind von Komponente D.

**11.** Verfahren zur Herstellung von Formmassen gemäß Anspruch 1-10, wobei die Komponenten A bis E mit gegebenenfalls weiteren Zusätzen vermischt und schmelzcompoundiert werden.

**12.** Verwendung der Formmassen gemäß Anspruch 1-11 zur Herstellung von Formkörpern.

**13.** Formkörper, erhältlich aus Formmassen gemäß der Ansprüche 1 bis 11.

**Claims**

**1.** Blends containing

A) from 40 to 99 parts by weight of aromatic polycarbonate and/or polyester carbonate,

B) from 0.5 to 60 parts by weight of graft polymer, prepared by means of mass, solution or mass-suspension polymerisation processes, of

B.1) from 50 to 99 wt.% of one or more vinyl monomers with

B.2) from 50 to 1 wt.% of one or more graft bases having a glass transition temperature < 10°C,

C) from 0 to 45 parts by weight of at least one thermoplastic polymer selected from the group of the vinyl (co) polymers and polyalkylene terephthalates,

D) from 0.1 to 30 parts by weight of a phosphonate amine

$$A_{3-y}\text{-N-}B_y \qquad (I)$$

in which

A represents a radical of formula (IIa)

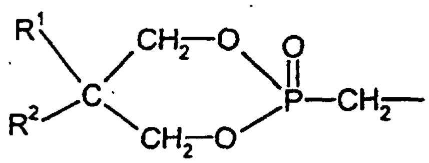

(IIa)

or (IIb)

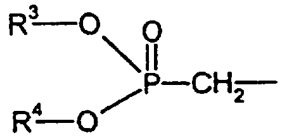

(IIb)

$R^1$ and $R^2$ are each independently of the other unsubstituted or substituted $C_1$-$C_{10}$-alkyl or unsubstituted or substituted $C_6$-$C_{10}$-aryl,
$R^3$ and $R^4$ are each independently of the other unsubstituted or substituted $C_1$-$C_{10}$-alkyl or unsubstituted or substituted $C_6$-$C_{10}$-aryl, or
$R^3$ and $R^4$ together represent unsubstituted or substituted $C_3$-$C_{10}$-alkylene,
y represents the numerical values 0, 1 or 2,

and
the substituents B are each independently hydrogen, optionally halogenated $C_2$-$C_8$-alkyl, unsubstituted or substituted $C_6$-$C_{10}$-aryl,

E) from 0 to 5 parts by weight of fluorinated polyolefin.

**2.** Blends according to claim 1 containing

from 60 to 98.5 parts by weight of A
from 1 to 40 parts by weight of B
from 0 to 30 parts by weight of C
from 1 to 25 parts by weight of D and
from 0.1 to 3 parts by weight of E.

**3.** Blends according to claims 1 and 2 containing from 2 to 25 parts by weight of C.

**4.** Blends according to any of claims 1 to 3 containing from 2 to 20 parts by weight of D.

**5.** Blends according to any of the preceding claims, wherein vinyl monomers B.1 are mixtures of

B.1.1 styrene, $\alpha$-methylstyrene, styrenes substituted at the ring. by halogen or by alkyl, and/or (meth)acrylic acid $C_1$-$C_8$-alkyl esters and

B.1.2 unsaturated nitriles, (meth)acrylic acid $C_1$-$C_8$-alkyl esters and/or derivatives of unsaturated carboxylic acids.

**6.** Blends according to any of the preceding claims, wherein the graft base is selected from at least one rubber from the group of the diene rubbers, EP(D)M rubbers, acrylate, polyurethane, silicone, chloroprene and ethylene/vinyl acetate rubbers.

**7.** Blends according to one or more of the preceding claims, wherein there are chosen as phosphonates: 5,5,5',5', 5",5"-hexamethyl-tris(1,3,2-dioxaphosphorinane-methane)amine-2,2',2"-trioxide, 1,3,2-dioxaphosphorinane-2-methaneamine, N-butyl-N[(5,5-dimethyl-1,3,2-dioxaphosphorinan-2-yl)methyl]-5,5-dimethyl-, P,2-dioxides; 1,3,2-dioxaphosphorinane-2-methaneamine, N-[(5,5-dimethyl-1,3,2-dioxaphosphorinan-2-yl)methyl] -5,5-dimethyl-N-phenyl-, P,2-dioxide; 1,3,2-dioxaphosphorinane-2-methaneamine, N,N-dibutyl-5,5-dimethyl-, 2-oxide, 1,3,2-dioxaphosphorinane-2-methaneimine, N-[(5,5-dimethyl-1,3,2-dioxaphosphorinan-2-yl)methyl]-N-ethyl-5,5-dimethyl-, P,2-dioxide, 1,3,2-dioxaphosphorinane-2-methaneamine, N-butyl-N-[(5,5-dichloromethyl-1,3,2-dioxaphosphorinan-2-yl)-methyl] - 5,5-di-chloromethyl-, P,2-dioxide, 1,3,2-dioxaphosphorinane-2-methaneamine, N-[(5,5-di-chloromethyl-1,3,2-dioxaphosphorinan-2-yl)methyl] -5,5-dichloromethyl-N-phenyl-, P,2-dioxide; 1,3,2-dioxaphosphorinane-2-methaneamine, N,N-di-(4-chlorobutyl)-5,5-dimethyl-2-oxides; 1,3,2-dioxaphosphorinane-2-methaneimine, N-[(5,5-dimethyl-1,3,2-dioxaphosphorinan-2-yl)methane]-N-(2-chloroethyl)-5,5-di(chloromethyl)-, P,2-dioxide.

**8.** Blends according to any one of claims 1 to 6 containing as phosphonate the compound of the formula:

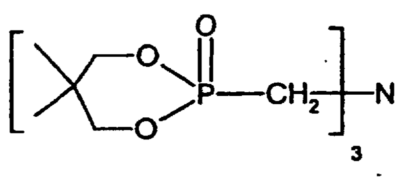

**9.** Blends according to any of the preceding claims containing at least one additive selected from the group of the lubricating and mould-release agents, nucleating agents, antistatics, stabilisers, colourings and pigments.

**10.** Blends according to any of the preceding claims containing further flameproofing agents which are other than component D.

**11.** Process for producing moulding compositions according to any of claims 1 to 10, wherein components A to E are mixed with other optional additives and melt-compounded.

**12.** Use of the moulding compositions according to any of claims 1 to 11 in the production of moulded bodies.

**13.** Moulded bodies obtainable from moulding compositions according to any of claims 1 to 11.

## Revendications

**1.** Mélanges contenant

A) 40 à 99 parties en poids d'un polycarbonate et/ou polyester-carbonate aromatique,
B) 0,5 à 60 parties en poids d'un polymère greffé, préparé par les techniques de polymérisation en masse, en solution ou en suspension-masse, de

B.1) 50 à 99 % en poids d'un ou plusieurs monomères vinyliques sur
B.2) 50 à 1 % en poids d'un ou plusieurs supports de greffage ayant une température de transition du

second ordre < 10°C,

C) 0 à 45 parties en poids d'au moins un polymère thermoplastique choisi dans le groupe des (co)polymères vinyliques et des téréphtalates de polyalkylène,
D) 0,1 à 30 parties en poids d'une phosphonatamine de formule

$$A_{3-y}\text{-N-}B_y \qquad (I),$$

dans laquelle
A représente un groupe de formule (IIa)

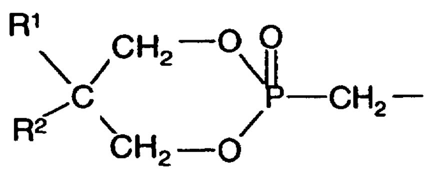

(IIa)

ou bien (IIb)

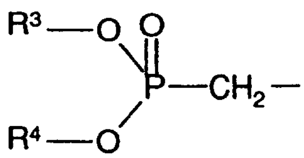

(IIb)

| | |
|---|---|
| $R^1$ et $R^2$ | représentent chacun, indépendamment l'un de l'autre, un groupe alkyle en $C_1$-$C_{10}$ substitué ou non ou un groupe aryle en $C_6$-$C_{10}$ substitué ou non, |
| $R^3$ et $R^4$ | représentent chacun, indépendamment l'un de l'autre, un groupe alkyle en $C_1$-$C_{10}$ substitué ou non ou un groupe aryle en $C_6$-$C_{10}$ substitué ou non, ou bien |
| $R^3$ et $R^4$ | forment ensemble un groupe alkylène en $C_3$-$C_{10}$ substitué ou non, |
| y | est égal à 0, 1 ou 2, et |

les symboles B représentent chacun, indépendamment les uns des autres, l'hydrogène, un groupe alkyle en $C_2$-$C_8$ éventuellement halogéné, un groupe aryle en $C_6$-$C_{10}$ substitué ou non,
E) 0 à 5 parties en poids d'une polyoléfine fluorée.

**2.** Mélanges selon revendication 1, contenant

60 à 98,5 parties en poids de A
1 à 40 parties en poids de B
0 à 30 parties en poids de C
1 à 25 parties en poids de D et
0,1 à 3 parties en poids de E

**3.** Mélanges selon les revendications 1 et 2, contenant 2 à 25 parties en poids de C.

**4.** Mélanges selon les revendications 1 à 3, contenant 2 à 20 parties en poids de D.

**5.** Mélanges selon les revendications qui précèdent, dans lesquels les monomères vinyliques B.1 sont des mélanges de

B.1.1 le styrène, l'α-méthylstyrène, des styrènes halogénés et/ou alkylés dans le noyau et/ou des (méth) acrylates d'alkyle en $C_1$-$C_8$ et

B.1.2 des nitriles insaturés, des (méth)acrylates d'alkyle en $C_1$-$C_8$ et/ou des dérivés d'acides carboxyliques insaturés.

**6.** Mélanges selon les revendications qui précèdent dans lesquels le support de greffage est choisi parmi au moins un caoutchouc du groupe des caoutchoucs diéniques, des caoutchoucs EP(D)M, des caoutchoucs d'acrylates, de polyuréthannes, de silicone, de chloroprène et d'éthylène/acétate de vinyle.

**7.** Mélanges selon une ou plusieurs des revendications qui précèdent dans lesquels les phosphonates sont choisis parmi : le 2,2',2"-trioxyde de 5,5,5',5',5",5"-hexaméthyl-tris(1,3,2-dioxaphosphorinane-méthane)amine, la 1,3,2-dioxaphosphorinane-2-méthanamine, le P,2-dioxyde de N-butyl-N-[(5,5-diméthyl-1,3,2-dioxaphosphorinan-2-yl) méthyl]-5,5-diméthyle ; la 1,3,2-dioxaphosphorinane-2-méthanamine ; le P,2-dioxyde de N-[(5,5-diméthyl-1,3,2-dioxaphosphorinan-2-yl)méthyl]-5,5-diméthyl-N-phényle ; la 1,3,2-dioxaphosphorinane-2-méthanamine; le 2-oxyde de N,N-dibutyl-5,5-diméthyle; la 1,3,2-dioxaphosphorinane-2-méthanamine, le P,2-dioxyde de N-[(5,5-diméthyl-1,3,2-dioxaphosphorinan-2-yl)méthyl]-N-éthyl-5,5-diméthyle ; la 1,3,2-dioxaphosphorinane-2-méthanamine ; le P,2-dioxyde de N-butyl-N-[(5,5-dichlorométhyl-1,3,2-dioxaphosphorinan-2-yl)méthyl]-5,5-dichlorométhyle, la 1,3,2-dioxaphosphorinane-2-méthanamine ; le P,2 dioxyde de N-[(5,5-dichlorométhyl-1,3,2-dioxaphosphorinan-2-yl)méthyl]-5,5-dichlorométhyl-N-phényle ; la 1,3,2-dioxaphosphorinane-2-méthanamine, le 2-oxyde de N, N-di-(4-chlorobutyl)-5,5-diméthyle ; la 1,3,2-dioxaphosphorinane-2-méthanamine ; le P,2-dioxyde de N-[(5,5-diméthyl-1,3,2-dioxaphosphorinan-2-yl)méthane]-N-(2-chloroéthyle)-5,5-di(chlorométhyle).

**8.** Mélanges selon l'une des revendications 1 à 6 contenant en tant que phosphonate le composé de formule :

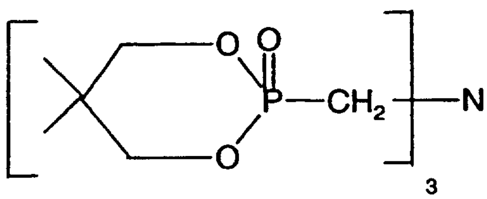

**9.** Mélanges selon les revendications qui précèdent contenant au moins un additif choisi parmi les agents lubrifiants et agents de démoulage, les agents de nucléation, les agents antistatiques, les stabilisants, les colorants et les pigments.

**10.** Mélanges selon les revendications qui précèdent, contenant d'autres agents ignifugeants, différents du composant D.

**11.** Procédé pour la préparation des matières à mouler selon les revendications 1 à 10, consistant à mélanger les composants A à E avec le cas échéant d'autres additifs puis à malaxer à l'état fondu.

**12.** Utilisation des matières à mouler selon les revendications 1 à 11 pour la fabrication d'objets moulés.

**13.** Objets moulés obtenus à partir des matières à mouler selon les revendications 1 à 11.